# EUROPEAN PATENT APPLICATION

(11) **EP 1 894 504 A2**
(43) Date of publication of application: **05.03.2008**
(21) Application number: 07016756.4
(22) Date of filing: 27.08.2007
(51) Int. Cl.: A47J 41/00, A47J 39/02, A47J 47/14

(54) **Inductively heated warming system**

(30) Priority: 28.08.2006 US 823678 P
(71) Applicant: EGC Enterprises, Inc., Chardon OH 44024 (US)
(72) Inventor: Dudman, Richard L., Euclid Ohio 44117 (US)
(74) Representative: Jones Day

(57) **Abstract**

A warming system includes a thermal battery for storing energy and warming an item. The thermal battery includes a porous, electrically-conductive material and a phase-change substance. The phase change substance is interspersed among a plurality of pores in the porous, electrically conductive materially. The warming system includes a first and second compartment. The first compartment is for receiving an item to be warmed, and the second compartment is for retaining the thermal battery therein.

## Description

### Field

This technology relates to heat storage devices. In particular, the technology concerns a heat storage system that can be inductively heated and that will emanate heat for a sustained period of time at a relatively constant temperature.

### Background

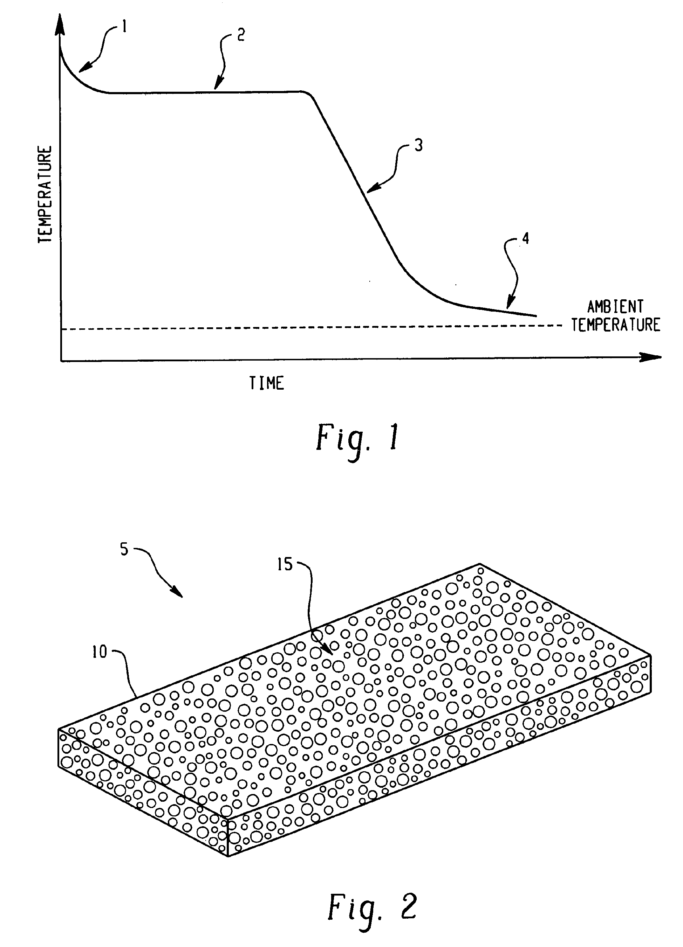

Energy storage devices are known that make use of the latent heat of fusion or the enthalpy of fusion to provide a steady amount of energy to a system for a sustained time period. These systems include a phase-change substance that is heated to a high temperature so that the solid substance changes to liquid form. Because of the latent heat of fusion of the substance, as the substance changes back into the solid phase it will give off heat at a steady temperature for a sustained period of time. An example cooling curve is shown in Fig. 1 that illustrates this phenomenon. The area of the graph labeled 1 indicates the substance is in the liquid state and is rapidly dropping in temperature as it gives off heat. The flat area of the graph labeled 2 indicates the steady temperature of the substance as it gives off heat for a sustained period of time while it is changing from the liquid to the solid state. After the substance has completely changed back to the solid form it will rapidly cool (shown on the graph as portion 3) until it equilibrates at the ambient temperature (shown on the graph as portion 4).

Warming systems are used in the food service industry, particularly in hospitals and other environments where many separate meals must be prepared and delivered to different places, and must be kept hot during the delivery process. Current systems primarily use conventional resistive heating elements to heat the phase-change substance to its liquid form. These devices have high-energy requirements and require relatively long time periods to supply the energy required to cause the substance to change phase.

It is known that a home heating and cooling product used in Europe utilizes a graphite material that has pockets machined into it to hold a phase change substance. This device is used to store heat energy during the day and it is released during the night.

### Summary

An inductively heated warming system having a phase-change substance interspersed in a porous electrically-conductive material is described and claimed.

A warming system includes a first compartment for receiving an item to be warmed and a second compartment retaining a thermal battery therein. The first and second compartments are separated by a middle portion. The thermal battery includes an electrically-conductive porous material and a phase-change substance filling a plurality of pores in the porous material.

A thermal battery includes a porous, electrically-conductive material having a porosity of about 30% to 80%, and a phase-change substance that is interspersed among a plurality of the pores of the porous material.

A method for making a heating system includes the steps of: providing a porous, electrically-conductive substance; providing a phase-change substance; and interspersing the phase-change substance among a plurality of pores in the porous substance.

A method for providing sustained warming includes the steps of: inserting a thermal battery in an inductive heating oven, the thermal battery including a porous, electrically-conductive substance and a phase-change substance, the phase-change substance being interspersed among a plurality of pores in the porous substance; inductively heating the thermal battery; placing the thermal battery in proximity to an item to be warmed; and warming an item to be warmed with the thermal battery.

### Brief Description of the Drawing Figures

Fig. 1 is a graph of a substance as it cools and changes phases over time;
Fig. 2 is a perspective view of an example thermal battery;
Fig. 3 is a cross-sectional view of an example warming system;
Fig. 4 is a perspective view of the example warming system of Fig. 3;
Fig. 5 is a diagram of example methods of using the example warming system of Fig. 3 to warm food;
Fig. 6 is a cross-sectional view of a second example warming system; and
Fig. 7 is a perspective view of the second example warming system.

### Detailed Description

The technology described herein combines the benefits of inductive heating with the benefits of relying on the latent heat of fusion in a phase-change substance to provide efficient heating and sustained warming at a constant temperature. Examples of this technology provided herein include environmentally and biologically safe materials. This is particularly important for use in the food industry.

Described herein is a warming system that incorporates a porous, electrically-conductive material that is filled with a phase-change substance. This "thermal battery" can be efficiently heated by induction methods. Because of the structure of the porous material, the phase change substance has a great deal of surface area in direct contact with the heated porous material. This allows the inductively heated porous material to quickly transfer heat to the phase change material in order to quickly and efficiently cause it to change phase and reach a high temperature.

In a known warming system, a phase-change substance is situated in a hermetically sealed pocket and the substance is heated with a conventional resistive heating element and forced air. In contrast, the technology described herein uses inductive heating that requires less power than conventional resistive heating elements, raises the phase-change substance to the desired temperature more quickly, and is also capable of raising the phase-change substance to a more precise elevated temperature. Furthermore, the phase-change substance need not necessarily be hermetically sealed, because it is contained in the porous material by the surface tension of the phase-change substance. Some example hermetic sealing materials include metal, ceramic, and plastic.

With reference now to the drawings, Fig. 2 shows an example of a thermal battery 5 that includes a porous, electrically-conductive material 10 and a phase-change substance 15.

The phase-change substance 15 may be absorbed into the porous, electrically-conductive material 10 by several methods. For example, the phase-change substance 15 can be melted and then the porous material 10 dipped into the liquefied phase-change substance 15. In another example, the porous material 10 is placed in a vacuum and the liquefied phase-change substance 15 is then drawn into the porous material 10 in a process of vacuum impregnation.

For the porous, electrically-conductive material 10, any electrically-conductive material that has multiple pockets that are capable of being filled with a liquid may be used. A high porosity, and therefore a low density are desirable. The more numerous the pores in the porous, electrically-conductive material 10, the more surface area will be in contact with the phase-change substance (indicated generally by numeral 15). Theoretically, the more surface area of the porous material 10 that is in contact with the phase-change substance 15, the more efficient the inductive heating process will be. The heat will also be more evenly distributed in a highly porous material, because there are no large pockets or absences of the phase-change substance.

A specific example of a highly porous, electrically-conductive material is graphite matte. Graphite matte is a non-magnetic carbon compound that is produced in a first stage of the manufacture of flexible graphite. Graphite matte is made by the following process: First, natural graphite flakes are treated by intercalating them with acid. Then a high energy heat source is applied to exfoliate the flakes. The graphite may be put directly in a flame of the heat source and the temperature may reach between 1800°F to 3000°F. Then the exfoliated flakes are placed in a veriform compression bed, and the product is compressed to 10 to 30 lbs/ft³.

Graphite matte has a high porosity, typically in the range of about 30% to about 80%, for example 40% to 70%, or 45% to 65%. Porous, electrically-conductive materials with low density (for example with a density between about 10 and about 30 lbs/ft³) are also likely to be very useful with the technology described herein, since these materials are likely to be highly porous. Other example materials include stainless steel foam, and reticulated metals, such as, copper, aluminum, and stainless steel.

Another way of describing the properties of the thermal battery 5 is the ratio of the porous material 10 to the phase-change substance 15. In one example the phase-change substance 15 and porous material 10 are present in a ratio of about 2:1 to about 2.5:1.

The phase-change substance 15 component of the thermal battery 5 is preferably a substance that has a melting/freezing point above typical ambient room temperature, (about 70 degrees Fahrenheit). The phase-change substance 15 should also be chemically stable so that it will not chemically decompose upon heating. However, other substances may be used, including those that sublimate above room temperature, or are liquid at room temperature. In preferred examples, the substance has a sufficiently high melting/freezing point to match or exceed the desired temperature for the object to be warmed. This temperature will be different depending on the application. In this regard, petroleum-based waxes and sugars have been determined to be suitable for many applications. Preferably, the phase-change substance should be non-corrosive especially if it is used in conjunction with a conductive, porous material that is subject to corrosion.

An example of a sugar that is especially well-suited for use in the food industry is erythritol. This sugar has the highest latent energy of all the sugars, (about 340 kJ/kg), a high melting point (about 242 °C), is safe for ingesting, and is even safe for consumption by diabetics. Non-toxicity is a valuable aspect in case the storage compartment for the thermal battery 5 should rupture, even though the phase-change substance should effectively be held in the porous material by surface tension forces.

Other substances with high latent energies (for example between about 200 kJ/kg and about 500 kJ/kg) and relatively high melting points (for example, between about 200 °C and about 300 °C) are also well-suited for use in the example thermal battery 5, because once heated to the liquid state, these substances will emanate heat at a high temperature for a sustained period of time until the phase-change substance reverts to the solid state.

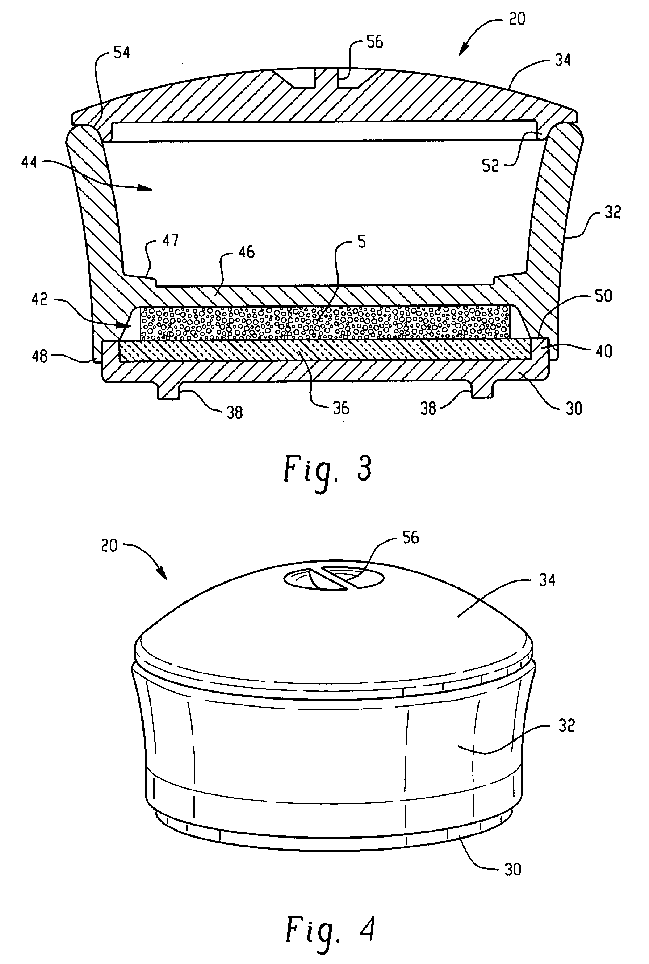

Fig. 3 depicts an example warming system 20 that incorporates a thermal battery 5. The example thermal battery 5 is housed in a container that includes a base 30, a shell 32, and a lid 34. The thermal battery 5 rests above an insulating layer 36 that functions to insulate the base from the heat that radiates from the thermal battery 5. This allows the base to be relatively cool and easier to handle. The insulating layer 36 in other examples may surround the sides of the thermal battery 5 to further insulate the base 30 and lower part of the shell 32 from excess heat.

The example base 30 has legs 38 or, in other examples, a rim that has a contoured bottom surface that is designed to mate with the contour of the lid 34. This feature facilitates stacking several warming systems, one on top of the other.

The example base 30 has a base lip 40 that runs around the circumference of the base 30 and extends upward. The base lip 40 is configured to mate with the example shell 32. The shell 32 and base 32 are coupled together and may be hermetically sealed.

The example shell 32 is substantially cylindrical and has a lower 42 and upper recess 44 that are separated by a middle portion 46. The lower recess 42 covers the thermal battery 5 and the thermal battery is in direct contact with the bottom side of the middle portion 46. The direct contact allows for an efficient transfer of heat to the top of the middle portion 46. The middle portion 46, when in use, will be in contact with a plate that contains a food item and that is located in the upper recess 44. The middle portion 46 has a plate retaining ledge 47 that runs around the circumference of the middle portion 46 and functions to prevent a plate from sliding in the upper recess 44. By the size and shape of the upper recess 44 (and optionally the plate retaining ledge 47), the warming system 20 is configured to hold a plate and its contents.

The bottom of the shell 32 has a shell lip 48 that runs around the circumference of the shell 32. The shell lip 48 is just outside and adjacent to the base lip 40, overlapping the base lip 40. A ledge 50 is formed where the shell lip 48 joins with the shell 32. The base lip 40 supports the weight of the shell 32, as the ledge 50 rests on the base lip 40.

The example lid 34 has a circumferential lid lip 52 that is configured to fit within the upper recess 44 of the shell 32. The lid lip 52 forms a contoured ledge 54 with the bottom of the lid 34. The lip and the contoured ledge are configured to match with the contour of the shell 44. A releasable but tight fit is desired between the lid 34 and the shell 32 to allow the lid 34 to be easily removed but to also seal the heat in the upper recess 44. In other examples the lid 34 and the shell 32 include ridges to provide a snap fit, or threads to provide a screw-type fit. To assist in the removal of the lid 34, a recessed handle 56 is formed in the lid 34. The handle 56 is recessed so as not to interfere with stable stacking of several warming systems 20.

Other example bases, shells, and lids may have different shapes, sizes, and configurations as known by those of skill in the art. For example, the lid may extend to or just below the middle portion 46, and the shell may rise only to or just above the middle portion. This configuration would allow the plate to be accessible on all sides once the lid is removed. The thickness (and thereby the insulative effect) of each surface may be varied according to the application, and can affect how long the warming effect lasts. The base, shell, and lid can be made of materials such as plastic, ceramic, or glass, among others.

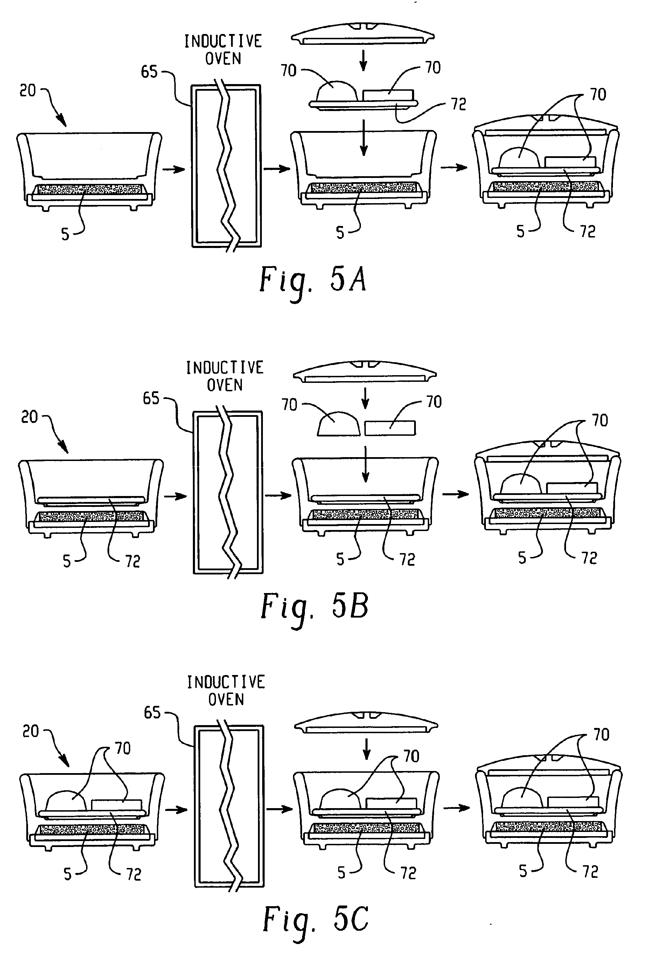

In Fig. 5, three example methods of using the example warming system 20 and an induction oven 65 to warm food items 70 and a plate 72 are depicted. In a first method, an example warming system 20 is transferred to an induction heating oven 65. The oven 65 is activated, generating an electromagnetic field and inducing eddy currents in the porous, electrically-conductive substance 10 in a manner known by those of skill in the art. As the porous substance 10 in the thermal battery 5 heats up, part of the heat is transferred to small pockets of phase-change substance 15 in the thermal battery 5. The phase-change substance 15 rises in temperature until it reaches the melting point. The heating is preferably continued until all of the phase-change substance 15 has melted into the liquid state. The phase-change substance 15 can be heated to a higher temperature in the liquid state; however, the substance will rapidly cool to the melting point temperature.

After heating, the warming system 20 is removed from the oven, and a plate 72 with food 70 may be set in the upper recess of the warming system 20. The lid is placed on the warming system 20 and the food on the plate is warmed by the energy from the thermal battery 5. The temperature of the thermal battery 5 is sustained at the melting point temperature until all the phase-change substance 15 changes back to solid. The insulated warming system 20 will maintain heat in the upper recess for a sustained period of time, extending even after the phase change substance 15 has cooled to the solid state, thereby allowing the food to be transported or stored for a period of time before serving.

Alternatively, in a second example method, an empty plate 72 could be heated in the warming system 20 in the induction oven 65, and then food 70 could be placed onto the plate 72 that is already warm. The lid can then be placed on the warming system 20 and it can be delivered to the recipient.

In a third alternative method, a plate 72 already loaded with food 70 may be placed in the warming system 20 and then heated in the induction oven 65 (with or without the lid). The plate 70 of food 72 can also be reheated in this manner.

In some applications, such as hospital food service, it will be desirable to use a large number of warming systems 20 at the same time. A large capacity induction heating oven 65 could be employed to warm many warming systems 20 at the same time.

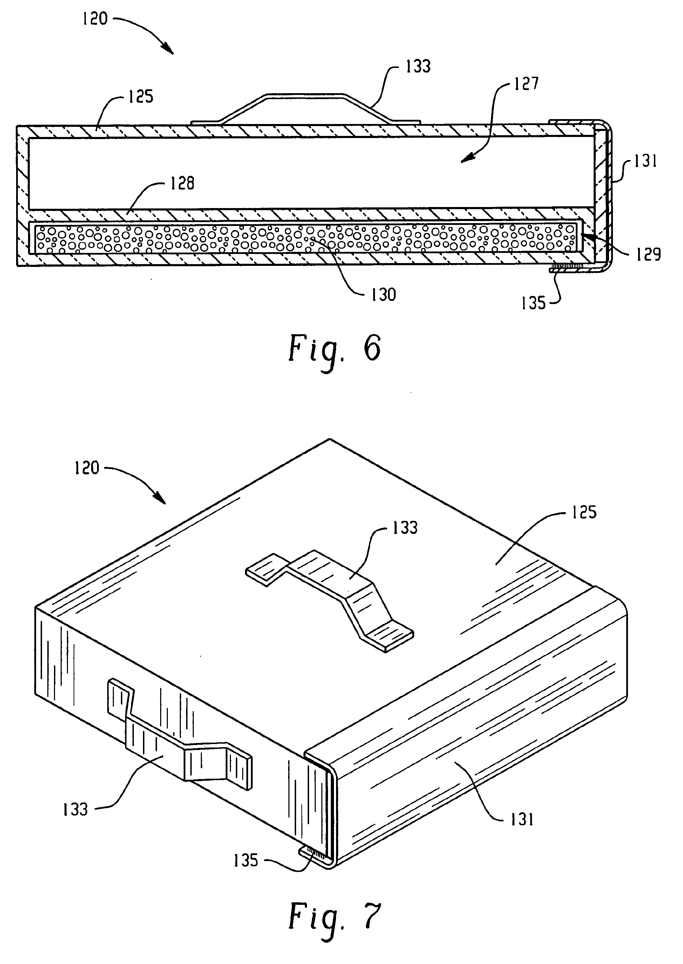

An example of a variation of the above described technology is a second example warming system 120 as shown in Figs. 5 and 6. The second example warming system may be used to hold a pizza box or some other food that is delivered directly to the consumer from a restaurant, but it may also be used for warming other non-food items or for other applications.

The second example warming system 120 includes an insulated shell 125 that has a first and second compartment 127, 129 that are divided by a middle portion 128. The exterior walls of the second example warming system and the middle portion 128 have a thickness and are filled with an insulative material, such as a soft polymer foam. The exterior walls are covered with a water resistant covering, such as vinyl. Preferably, this covering is also a light-weight material. The first compartment 127 is partially open on one side, and is sized to allow the insertion of a boxed food item, such as a pizza. The second compartment 129 holds a thermal battery 130 of the type described above. The thermal battery radiates heat through the middle portion 128 warming the first compartment 127 and any item disposed therein. The second compartment 129 is coated with a material that is capable of withstanding the high-temperatures reached by the thermal battery 130.

An exterior flap 131 is attached at the top of the second example warming system 120. The exterior flap 131 is made of a flexible material and is preferably filled with insulation. The exterior flap 131 may be moved between a closed position where the opening to the first compartment 127 is covered, and an open position where the opening to the first compartment 127 is uncovered. The exterior flap 131 is releasably attached to the bottom of the second example warming system 120 by Velcro, snaps, or some other coupling mechanism 135.

One or more handles 133 are attached to the top or sides of the exterior of the second example warming system 120. The handles 133 allow for easy carrying and also function to protect the hands of persons that are carrying the warming system from being burned. This is because the exterior of the warming system, particularly the bottom surface that is in proximity to the thermal battery 130, may become rather hot unless it is very well insulated.

In a modified second example warming system, the sides and top are rigid so that the top will not collapse into the first compartment 127. Food items that are not enclosed in a box can be warmed in this modified example. For example, entire trays of food may be inserted in this modified second example warming system.

In use, the second example warming system 120 may be placed into an induction heating oven 65 until the phase-change substance 15 in the thermal battery 130 has completely changed to the liquid state, as described above in the methods shown in Fig. 5. The second example warming system 120 may be kept in the oven 65 at this temperature until it is needed to store a food item. When needed, the food item is then inserted into the first compartment 127 and the exterior flap 131 is closed over the opening to the first compartment 127. The food item may then be delivered to the recipient in the second example warming system 120.

While various features of the claimed examples are presented above, it should be understood that the features may be used singly or in any combination thereof. The examples described herein are exemplary. Therefore, the claimed examples are not to be limited to only the specific examples depicted herein. Further, it should be understood that variations and modifications of the above described technology may occur to those skilled in the art to which this disclosure pertains. The disclosure may enable those skilled in the art to make and use examples having alternative elements that likewise correspond to the elements recited in the claims.

Other uses are also envisioned for the present technology, such as hot pads for keeping food warm on a table, heating pads for therapeutic use, and any known techniques where a heated material is used for sustained periods of time.

## Claims

1. A warming system, comprising:
a first compartment for receiving an item to be warmed;
a second compartment retaining a thermal battery therein;
the first and second compartments being separated by a middle portion; and
the thermal battery including an electrically-conductive porous material and a phase-change substance filling a plurality of pores in the porous material.

2. The warming system of claim 1, further comprising:
a base;
a shell coupled to the base, the second compartment being formed between the base
and the shell; and
a lid removably coupled to the shell, the first compartment being formed between the lid and the shell.

3. The warming system of any of claims 1 or 2, wherein the second compartment is configured to receive a plate.

4. The warming system of any of claims 1 to 3, further comprising:
an exterior flap coupled to an exterior of the warming system, and movable between an open position that uncovers the first compartment, and a closed position that covers the first compartment.

5. The warming system of any of claims 1 to 4, further comprising an insulating material disposed in the second compartment.

6. The warming system of any of claims 1 to 5, wherein the thermal battery is in direct contact with the middle portion.

7. The thermal battery of any of claims 1 to 6, wherein the porous, electrically-conductive material has a porosity of about 30% to 80%.

8. The thermal battery of claim 7, wherein the porous, electrically-conductive material is graphite matte.

9. A thermal battery, comprising:
a porous, electrically-conductive material having a porosity of about 30% to 80%, and
a phase-change substance that is interspersed among a plurality of the pores of the porous material.

10. The thermal battery of claim 9, wherein the phase-change substance and the porous, electrically-conductive material are present in a ratio of about 2:1 1 to about 2.5:1, respectively.

11. The thermal battery of any of claims 9 or 10, wherein the porous, electrically-conductive material has a density of about 10 lbs/ft³ to 30 lbs/ft³.

12. The thermal battery of any of claims 9 to 11, wherein the phase-change substance has a melting point of about 200°C to about 300°C.

13. The thermal battery of claim 12, wherein the phase-change substance is erythritol.

14. The thermal battery of any of claims 9 to 13, wherein the porous, electrically-conductive material is graphite matte.

15. The system of any of claims 9 to 14, wherein the phase-change substance is interspersed among a plurality of pores in the porous substance.

16. A method for making a heating system, comprising the steps of:
providing a porous, electrically-conductive substance;
providing a phase-change substance; and
interspersing the phase-change substance among a plurality of pores in the porous substance.

17. The method of claim 16, wherein the porous, electrically-conductive substance is formed by:
treating natural graphite flakes by intercalating with acid;
introducing the flakes into a high energy heat source to exfoliate the flakes;
introducing the exfoliated flakes into a veriform compression bed, and compressing it to a density of 10 to 30 lbs/ft³.

18. The method of any of claims 16 or 17, further comprising the step of:
providing an inductive heating oven.

19. The method of any of claims 16 to 18, wherein the phase-change substance is charged into the porous, electrically conductive substance by vacuum impregnation.

20. A method for providing sustained warming, comprising the steps of:
inserting a thermal battery in an inductive heating oven, the thermal battery including a porous, electrically-conductive substance and a phase-change substance, the phase-change substance being interspersed among a plurality of pores in the porous substance;
inductively heating the thermal battery;
placing the thermal battery in proximity to an item to be warmed;
warming an item to be warmed with the thermal battery.
